(19) Europäisches Patentamt
European Patent Office
Office européen des brevets

(11) **EP 2 536 075 B1**

(12) **FASCICULE DE BREVET EUROPEEN**

(45) Date de publication et mention
de la délivrance du brevet:
**20.05.2020 Bulletin 2020/21**

(51) Int Cl.:
***H04L 12/70*** *(2013.01)*     ***H04N 21/442*** *(2011.01)*
***H04N 21/472*** *(2011.01)*     ***H04L 12/801*** *(2013.01)*
***H04L 29/06*** *(2006.01)*     ***H04N 21/44*** *(2011.01)*

(21) Numéro de dépôt: **12170699.8**

(22) Date de dépôt: **04.06.2012**

(54) **Procédé de demande d'accès par un terminal à un contenu numérique apte à être téléchargé depuis un réseau.**

Verfahren zur Anfrage um Zugriffsberechtigung über ein Endgerät auf einen digitalen Inhalt, der über ein Netz heruntergeladen werden kann

Method for requesting access by a terminal to digital content suitable for being downloaded from a network

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.06.2011 FR 1155162**

(43) Date de publication de la demande:
**19.12.2012 Bulletin 2012/51**

(73) Titulaire: **Orange**
**75015 Paris (FR)**

(72) Inventeurs:
• **Bouvet, Eric**
**35520 MONTREUIL LE GAST (FR)**
• **Duvivier, Philippe**
**35133 ROMAGNE (FR)**

(56) Documents cités:
**EP-A1- 1 826 980**     **WO-A1-2004/039034**
**US-A1- 2002 120 747**     **US-A1- 2004 264 489**

**Description**

<u>Domaine technique</u>

La présente invention a trait à un procédé de demande d'accès par un terminal à un contenu numérique apte à être téléchargé depuis un réseau. L'invention se rapporte tout particulièrement à la réception et la restitution de contenus numériques, comme des vidéos ou des bandes-son, par un terminal, depuis un réseau de communication. L'invention s'applique notamment au visionnage de vidéo à la demande (ou VoD pour 'Video On Demand') sur un terminal connecté à un réseau de type Internet. Elle vise à optimiser le temps d'attente nécessaire à la visualisation d'un tel contenu numérique en particulier encodé avec un débit variable (ou mode VBR pour 'Variable Bit Rate').

<u>Etat de la technique</u>

La vidéo à la demande est un service offert par un serveur qui permet à un utilisateur d'un terminal connecté à un réseau de télécommunication de rendre, ou restituer, un contenu numérique de son choix parmi une liste prédéterminée de contenus.
Le terminal émet généralement une requête à destination du serveur, en indiquant le contenu choisi, et il reçoit en retour un flux de données numériques relatives à ce contenu.
Un contenu numérique peut correspondre notamment à une série d'images, à une vidéo, ou de manière plus générale à tout type de contenu multimédia qui peut être transmis dans le réseau considéré.
Le terminal est adapté pour recevoir ce contenu numérique sous forme de données et pour en faire une restitution. Cette restitution consiste à fournir au niveau du terminal le contenu numérique sous une forme accessible à l'utilisateur. Par exemple, des données reçues correspondant à une vidéo sont restituées au niveau du terminal sous la forme d'un affichage, ou visualisation, de la vidéo correspondante avec sa bande-son associée. Dans la suite, on assimilera le contenu numérique à une vidéo et la restitution à une visualisation.
Il est souhaitable que l'utilisateur puisse commencer la visualisation de sa vidéo sur le terminal sans attendre d'avoir reçu tout le flux de données vidéo.
A cet effet, la vidéo à la demande est souvent transportée et consommée en temps réel, c'est-à-dire que les données numériques sont transmises sur le réseau et visualisées par le terminal au fur et à mesure de leur arrivée. Dans ce contexte, le terminal dispose traditionnellement d'une mémoire tampon (*buffer* en anglais) de réception d'une capacité donnée, par exemple quelques images constitutives de la vidéo. Le terminal doit recevoir une partie des données numériques dans cette mémoire tampon avant de pouvoir les afficher. Ces serveurs de vidéo à la demande en temps réel ne fonctionnent correctement que si l'utilisateur dispose d'un débit sur le réseau au moins égal au débit de la vidéo, ou débit de codage, c'est-à-dire le débit avec lequel la vidéo a été encodée. Dans la négative, le terminal ne peut restituer convenablement le contenu dont la visualisation souffre de saccades, sauts ou gels d'images.
Ainsi le document WO20043903 décrit-il plusieurs méthodes permettant de diminuer le temps d'attente avant restitution. Cependant cette réduction se fait au détriment de la qualité du contenu restitué.
Une alternative à cette distribution est le transport de la vidéo avec un protocole dit de téléchargement progressif. Ce mode de distribution est généralement utilisé quand le débit de téléchargement dont dispose l'utilisateur n'est pas garanti pour le transfert en temps réel de la vidéo, notamment si le terminal n'est pas capable de recevoir la vidéo à son débit de codage. Le principe du téléchargement progressif est de transférer un fichier du serveur vers le terminal, ce dernier stockant suffisamment de données de la vidéo de manière à garantir que les dernières données seront reçues avant leur instant prévisionnel d'affichage. Si le terminal ne stocke pas suffisamment de données en mémoire pour garantir un affichage continu des données, il s'ensuit un problème de restitution de la vidéo dont la visualisation souffre de saccades, arrêts d'images, etc. A l'inverse, si on attend que le terminal ait stocké davantage de données que strictement nécessaire, l'utilisateur peut s'impatienter de subir un temps d'attente inutilement élevé.
L'invention offre une solution ne présentant pas les inconvénients de l'état de la technique.

<u>L'invention</u>

Selon un aspect fonctionnel, l'invention a pour objet un procédé de demande d'accès par un terminal à un contenu numérique apte à être téléchargé depuis un réseau, ledit contenu étant encodé avec un débit de codage et apte à être reçu avec un débit de téléchargement sous la forme d'un flux de données, ledit terminal étant apte à requérir la restitution du contenu, caractérisé en ce qu'une demande d'accès est suivie d'une étape de calcul d'un temps d'attente avant restitution prenant en compte le débit de téléchargement et le débit de codage.
Ainsi, par le calcul d'un temps d'attente avant restitution et sa mise à disposition, l'invention offre l'avantage à l'utilisateur du terminal, dès que ce temps d'attente est écoulé, de pouvoir restituer rapidement et correctement la vidéo, en évitant les saccades, les arrêts, ou les gels d'image. La mise à disposition se fait sous forme, soit de fourniture à l'utilisateur du temps d'attente avant restitution, qui pourra par exemple être affiché sur son terminal, soit de la fourniture de ce même temps d'attente à un programme qui pourra par exemple déclencher automatiquement la visualisation à son expiration.

Selon un mode de mise en œuvre particulier de l'invention, un procédé tel que décrit ci-dessus est en outre caractérisé en ce que le débit de codage est constant et en ce que des informations sont associées au contenu, les informations décrivant un débit de codage et une durée et en ce que le calcul du temps d'attente avant restitution est fonction d'un rapport entre le débit de codage et le débit de téléchargement.

Ainsi, l'invention offre l'avantage de fournir un calcul simple pour le temps d'attente avant restitution dans le cas où la vidéo a été encodée avec un débit constant (mode dit CBR - Constant Bit Rate), c'est-à-dire que chaque entité de base (image ou groupe d'images) de la vidéo est codée avec la même taille, voire très précisément si le débit de téléchargement est, lui aussi, constant. Dans un tel cas, en effet, le temps d'attente avant restitution est une fonction simple de débit de la vidéo et du débit de téléchargement. Par rapport, on entend ici par exemple un ratio entre les deux débits, ou une différence.

Selon un deuxième mode de mise en œuvre particulier de l'invention, qui pourra être mis en œuvre alternativement ou cumulativement avec le précédent mode de mise en œuvre, un procédé tel que décrit ci-dessus est en outre caractérisé en ce que le débit de codage est variable, et en ce que le contenu est représenté par au moins un ensemble i associé à un débit de codage respectif DV(i) et une durée respective T(i), et en ce que le calcul du temps d'attente avant restitution (TaR) pour ledit ensemble i s'effectue selon la formule mathématique suivante :

$$TaR(i) = max(0, TaR(i+1) + \Delta(i))$$

Où :

- TaR(i+1) est le temps d'attente avant restitution pour l'ensemble précédent (i+1) ;

- $\Delta(i)$ représente la variation du temps d'attente avant restitution induite par l'ensemble i ;

- L'opérateur max () affecte une valeur nulle à TaR(i) si TaR(i) est négatif.

Ainsi, l'invention offre encore l'avantage de fournir un calcul pour le temps d'attente avant restitution dans le cas où la vidéo a été encodée avec un débit variable (VBR-Variable Bit rate), c'est-à-dire que chaque entité de base de la vidéo est codée avec une taille qui lui est propre. De manière générale, il est plus intéressant d'utiliser un codage variable car ce type de codage fournit une meilleure qualité pour la vidéo, en réalisant un meilleur compromis entre la taille finale du fichier vidéo et la qualité de la vidéo reconstruite : une meilleure allocation de données peut être réservée pour des scènes complexes, alors que des scènes plus simples (comportant moins de détail, de mouvement, etc.) nécessiteront moins de données. Cependant ce type de codage est peu utilisé car il est dans ce cas impossible de prévoir simplement ce temps d'attente avant restitution. L'application de la formule de l'invention permet de résoudre ce problème : à chaque moment de la vidéo, on peut calculer précisément le temps durant lequel l'utilisateur devra attendre pour visualiser sans encombre son contenu à débit variable. Dans notre exemple, qui sera décrit plus tard, l'ensemble est constitué d'une ou plusieurs séquences d'images.

Selon encore un troisième mode de mise en œuvre particulier de l'invention, qui pourra être mis en œuvre alternativement ou cumulativement avec l'un des modes de mise en œuvre décrit ci-dessus, un procédé tel que décrit ci-dessus est caractérisé en ce que le débit de codage est variable et en ce que des informations sont associées au contenu, les informations décrivant au moins un ensemble i associé à un débit de codage respectif DV(i), et une durée respective T(i) et en ce que le résultat du calcul du temps d'attente avant restitution est majoré.

L'invention offre ainsi l'avantage de fournir un calcul très simple de majoration pour obtenir le temps d'attente avant restitution. Ainsi, par exemple, pour une vidéo encodée avec un débit variable, il suffira d'augmenter d'un certain pourcentage, ou de quelques minutes, le temps d'attente avant restitution qui serait nécessaire si la vidéo était encodée en mode constant. Dans un autre exemple on pourra prendre en compte la taille du contenu numérique, ou toute autre donnée appropriée au calcul de cette majoration, de manière à obtenir un résultat satisfaisant pour l'utilisateur, en lui évitant à la fois de perdre du temps si le temps d'attente est surestimé ou de subir une mauvaise restitution du contenu si le temps d'attente est sous-estimé.

Selon un aspect matériel, l'invention concerne également un terminal apte à requérir la restitution d'un contenu téléchargé sous la forme d'un flux de données depuis un réseau, ledit contenu numérique ayant été encodé avec un débit de codage, le terminal comprenant des moyens de réception aptes à recevoir le contenu avec un débit de téléchargement, caractérisé en ce qu'il comprend des moyens pour calculer un temps d'attente avant restitution prenant en compte le débit de téléchargement et le débit de codage.

Selon un autre aspect matériel, l'invention concerne également un serveur apte à transmettre un contenu numérique sous la forme d'un flux de données sur un réseau de communication, le contenu étant encodé avant sa transmission avec un débit de codage, caractérisé en ce qu'il comprend des moyens de création d'informations associées au contenu numérique à transmettre, les informations étant relatives au débit de codage du contenu.

Selon un autre aspect matériel, l'invention concerne également un système informatique incluant un serveur et un terminal tels que définis ci-dessus.

Selon un autre aspect matériel, l'invention concerne également un programme d'ordinateur apte à être mis en œuvre sur un terminal tel que défini ci-dessus, le programme comprenant des instructions de code qui, lorsque le programme est exécuté par un processeur, réalise les étapes de l'un des modes de mise en œuvre du procédé de demande d'accès par un terminal tel que décrit ci-dessus.

L'invention sera mieux comprise à la lecture de la description qui suit, donnée à titre d'exemple et faite en référence aux dessins annexés.

Les figures:

- La figure 1 représente schématiquement un système constitué d'un serveur et d'un terminal selon un mode de réalisation de l'invention.

- La figure 2 illustre une architecture d'un serveur selon un mode de réalisation de la présente invention.

- La figure 3 illustre une architecture d'un terminal selon ce mode de réalisation de la présente invention.

- La figure 4 représente sous forme de chronogramme les échanges réalisés sur le réseau entre le terminal et le serveur pour aboutir à la visualisation d'un contenu numérique sur le terminal selon un mode de réalisation de la présente invention.

- La figure 5 illustre l'évolution temporelle d'une vidéo codée en mode variable selon un mode de réalisation de l'invention.

- La figure 6 illustre l'évolution temporelle d'une vidéo codée en mode variable selon une variante du mode de réalisation de l'invention.

- La figure 7 illustre par un organigramme une étape de calcul du temps d'attente avant restitution selon un mode de réalisation de l'invention.

Description détaillée d'un exemple de réalisation illustrant l'invention

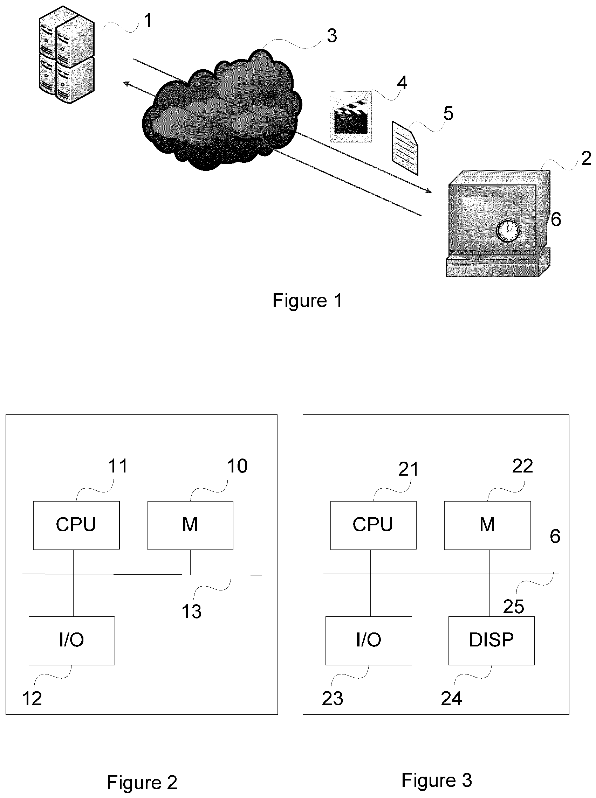

La figure 1 représente schématiquement un système constitué d'un serveur 1 et d'un terminal 2 connectés entre eux au travers d'un réseau de communication Internet 3 selon un mode de réalisation de l'invention. Le terminal peut être par exemple un PC, un téléphone mobile, un décodeur numérique, une télévision connectée ou tout autre terminal apte à recevoir des données multimédia. Naturellement, aucune limitation n'est attachée au type de terminal utilisé, ni au type de réseau de transmission utilisé.

Le serveur 1 propose un service de transmission de contenus. Dans notre exemple, le service est un service de vidéo à la demande (ou VOD, acronyme anglo-saxon de *Video On demand*). Le service de VOD proposé sur le serveur 1 permet à un utilisateur du terminal de choisir un contenu numérique, par exemple un film ou un programme de télévision à la demande, dans un catalogue.

Le terminal 2 reçoit le contenu numérique 4 dans le but de le restituer. Dans cet exemple, le terminal est équipé de moyens de restitution et les données reçues correspondant à une vidéo sont restituées au niveau du terminal sous la forme d'un affichage de la vidéo correspondante. Cependant, la réception et la restitution pourraient être réalisées par deux terminaux distincts. Selon un mode de réalisation, le contenu numérique a été encodé avec un débit variable (VBR) au cours du temps, c'est-à-dire de manière à privilégier les informations importantes de la vidéo sans chercher à conserver un débit identique à chaque instant.

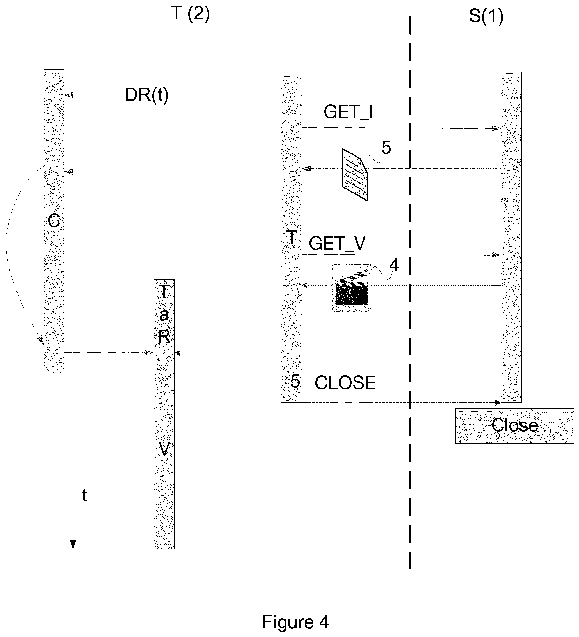

Dans cet exemple, la vidéo est transportée via le réseau 3 à l'aide d'un protocole dit de téléchargement progressif, par exemple le protocole HyperText Transfer Protocol, plus connu sous l'abréviation HTTP, s'exécutant sur une couche de transport TCP (Transmission Control Protocol). Les échanges protocolaires entre le serveur et le terminal seront détaillés plus tard à l'appui de la figure 4.

Dans cet exemple, le terminal 2 initie le téléchargement par une requête adressée au serveur 1. Il reçoit en retour un fichier d'informations 5 et un fichier de données associées au contenu numérique 4. Aucune limitation n'est cependant attachée au moyen mis en œuvre pour déclencher la réception d'un contenu numérique et du fichier d'informations associées au niveau du terminal dans la présente invention. En effet, le serveur pourrait spontanément transmettre un contenu, sans réception d'une requête préalable issue du terminal.

Avant de commencer son affichage, le terminal doit stocker suffisamment de données de la vidéo 4 pour garantir que les dernières données, par exemple les dernières images de la vidéo, seront reçues avant leur instant prévisionnel d'affichage. Ce volume de données suffisantes correspond à un temps d'attente, fonction du débit de la vidéo et du débit sur le réseau, ou débit de téléchargement, que l'on appelle dans la suite temps d'attente avant restitution. Si le temps d'attente avant restitution n'est pas respecté, la vidéo ne peut être restituée correctement.

Dans ce mode de réalisation, le terminal calcule le temps d'attente avant restitution, comme il sera détaillé dans la suite, à l'aide du fichier 5 qui contient des informations temporelles et de débit sur la vidéo. Le terminal utilise aussi le débit estimé pour le téléchargement. Ce temps d'attente avant restitution, noté TaR, est affiché pour l'utilisateur sur une zone 6 de son écran, afin que l'utilisateur du terminal sache combien de temps il doit patienter avant de commencer à jouer sa vidéo. Lorsque le temps TaR est écoulé, la vidéo peut être restituée sans encombre sur le terminal, jusqu'à la fin du contenu.

L'utilisateur peut aussi, par exemple via une interface homme-machine, préciser l'instant dans la vidéo à partir duquel il souhaite commencer la visualisation. Il peut s'agir par exemple du début d'un chapitre, ou de l'instant de début d'une scène. Le temps d'attente avant restitution calculé alors par l'invention est celui que l'utilisateur doit respecter avant de commencer à jouer sa vidéo depuis l'instant précisé jusqu'à la fin du contenu.

La figure 2 présente la structure simplifiée d'un serveur selon l'invention. Un tel serveur comprend une unité de traitement 11 , équipée par exemple d'un processeur CPU destiné à exécuter les différentes étapes du procédé décrit par la suite sur le serveur, relié à une mémoire 10 (M) dans laquelle sont mémorisés (dans une partie permanente - ROM) au moins un programme logiciel de transmission des données (vidéo) du service de VOD et un programme logiciel de génération de fichiers d'informations mettant en œuvre une étape de génération d'un fichier d'informations selon l'invention. Le serveur s'interface avec le réseau 3 de la figure 1 par l'intermédiaire du module d'entrées-sorties (I/O) 12. L'unité de traitement 11, la mémoire 10 et le dispositif d'entrées-sorties 12 communiquent par l'intermédiaire d'un bus 13.

La figure 3 présente la structure simplifiée d'un terminal selon l'invention. Un tel terminal comprend une unité de traitement 21, équipée par exemple d'un processeur CPU destiné à exécuter les différentes étapes du procédé décrit par la suite sur le terminal, relié à une mémoire 22 (M) dans laquelle sont mémorisés (dans une partie permanente - ROM) au moins un programme logiciel de lecture d'un fichier d'informations associé à une vidéo, un programme d'évaluation du débit de téléchargement, un programme de calcul du temps d'attente avant restitution, un programme de décodage des vidéos entrantes et un programme d'affichage des vidéos décodées. A l'initialisation, les instructions de code de ces programmes d'ordinateur sont par exemple chargées dans une mémoire RAM de la mémoire M 22, avant d'être exécutées par le processeur CPU. Le terminal s'interface avec le réseau 3 de la figure 1 par l'intermédiaire du module d'entrées-sorties (I/O) 23. Il reçoit notamment par ce biais le fichier d'informations et le fichier des données vidéo. Le fichier d'informations est utilisé pour calculer le temps d'attente avant restitution de la vidéo qui est décodée puis affichée par le processeur au moyen de l'afficheur 24 (DISP). Le temps d'attente avant restitution peut également être affiché au moyen de l'afficheur 24. Tous ces éléments communiquent entre eux par l'intermédiaire d'un bus 25.

La figure 4 représente sous forme de chronogramme les échanges HTTP réalisés entre le terminal T (2) et le serveur S (1) pour aboutir à la visualisation d'un contenu numérique sur le terminal. Le temps s'écoule vers le bas, comme symbolisé par la flèche t.

Dans cet exemple, on suppose que le terminal connaît une adresse du serveur et qu'il est apte à établir avec lui une communication selon le protocole HTTP. Trois traitements réalisés par le terminal, correspondant chacun à un programme logiciel s'exécutant sur le CPU 21 du terminal, sont représentés par trois rectangles notés respectivement C (Calcule), V (Visualise) et T (Télécharge).

Lorsqu'un terminal souhaite télécharger une vidéo, il émet une première requête de type GET selon le protocole HTTP, notée GET_I sur la figure, pour obtenir le fichier d'informations. Les paramètres de la requête comportent au minimum le nom du fichier d'informations à télécharger. En réponse, le serveur transmet au terminal le fichier d'informations 5. Lorsque le terminal a reçu le fichier d'informations, ou parallèlement à sa réception, il émet une seconde requête HTTP/GET à destination du serveur, notée GET_V, contenant au minimum le nom du fichier vidéo à télécharger. Le serveur transmet la vidéo 4 au terminal. Le début de la vidéo est stockée dans la mémoire M du terminal, comme symbolisé par le rectangle hachuré TaR (Temps avant Restitution), mais la visualisation ne débute pas immédiatement.

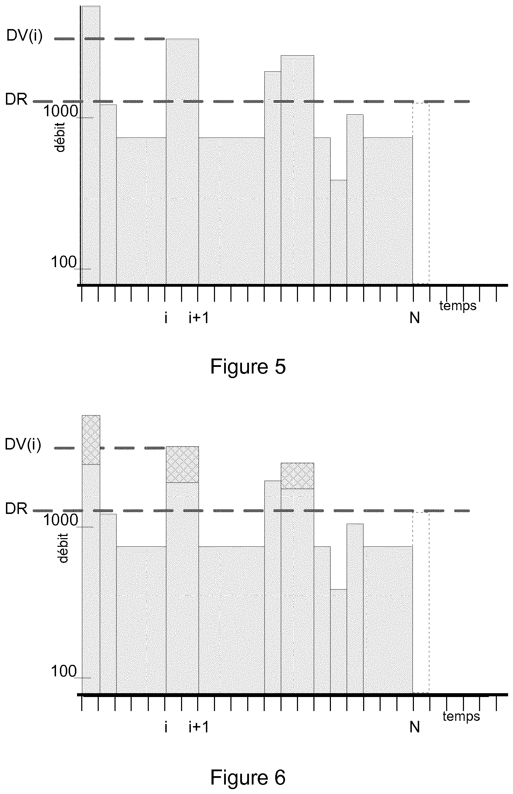

En parallèle, le terminal analyse le fichier d'informations 5 reçu, en extrait les informations pertinentes et calcule (C) le temps d'attente avant restitution, TaR, comme il sera décrit à l'appui de la figure 5. Le calcul est symbolisé sur la figure par une flèche courbe. Pour calculer le temps d'attente avant restitution, le terminal a besoin également d'évaluer le débit de téléchargement sur le réseau, DR(t), qui peut être constant ou varier au cours du temps. A la fin du calcul de TaR, un délai est initié, à l'issue duquel la visualisation de la vidéo peut débuter, comme symbolisé par la partie non hachurée du rectangle V.

Lorsque le téléchargement de la vidéo est terminé, le terminal peut classiquement fermer la connexion en émettant à destination du serveur une requête de type HTTP/CLOSE. La visualisation peut continuer sur le terminal.

La figure 5 illustre l'évolution temporelle d'une vidéo codée en mode variable selon un mode de réalisation de l'invention. Plus précisément, la figure 3 représente schématiquement le débit en kilobits (kbits) sur l'axe des ordonnées (une unité représente 100 kbits) associé au cours du temps aux images ou groupes d'images constitutives de la vidéo. Dans cet exemple, une milliseconde (msec) de vidéo représente une unité sur l'axe des abscisses.

On considère par ailleurs que la vidéo est découpée en ensembles illustrés par des fragments, chaque fragment correspondant à une séquence homogène pendant laquelle le débit du flux vidéo, bien qu'il soit encodé en mode variable, peut être considéré comme constant, ou pseudo-constant. Plus la durée des fragments est faible, plus l'approximation du débit par une constante est fiable. Sur la figure 3, on a ainsi 11 fragments que l'on peut numéroter de 0 à 10. De manière plus générale, on considère que l'on a N fragments (N=11 sur l'exemple). A chaque fragment i sont associés :

- une durée T(i) en secondes ;

- Un débit vidéo DV(i) en bits par seconde (ou kilobits par seconde Kb/s ou mégabits par seconde Mb/s) ;

- un volume de données V(i) en bits, égal au produit du débit courant par la durée (V(i) = DV(i)*T(i)).

Par exemple pour le fragment noté i (i=5) sur la figure , on a T = 2 millisecondes, DV = 1,5Mb/s, V = 1,5 Mb/s*0,002s = 0,003 Mbits = 3 Kbits.

Selon ce mode de réalisation de l'invention, cette découpe et ces données sont connues par le serveur après son analyse d'un film encodé en VBR. On peut imaginer par exemple que le serveur analyse chaque film pendant, ou juste après son encodage. Le serveur peut donc stocker les données associées dans un fichier d'informations. Un tel fichier peut prendre par exemple l'allure suivante, en référence à la figure 5 :

| Fragment | DV (en kilobits par seconde) | T (en secondes) |
|---|---|---|
| 0 | 1700 | 0.0012 |
| 1 | 1100 | 0.0011 |
| 2 | 900 | 0.0033 |
| ... | | |
| 10 | 900 | 0.0034 |

Ainsi, le fragment 1 a dans l'exemple une durée de 1,2 milliseconde et un débit de 1100 kb/s. Alternativement, on peut indiquer, dans le fichier d'informations, le volume au lieu du temps ou du débit.

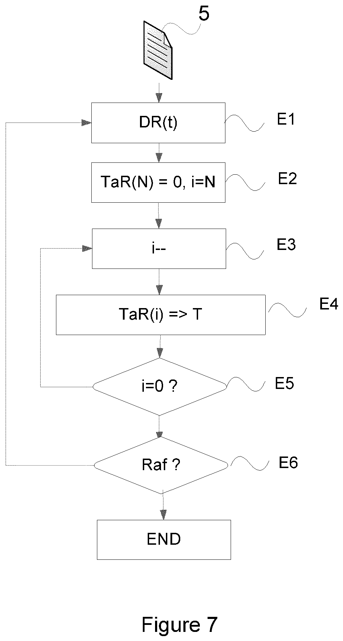

On considère par ailleurs que le terminal a les moyens d'apprécier un débit réseau, ou débit de téléchargement utile disponible au temps t du calcul, noté DR(t). Dans cet exemple, on considère que ce débit est constant, il est représenté par le trait horizontal pointillé noté DR et a pour valeur 1,1 Mb/s. De manière plus générale, DR(t) est une variable non prévisible qui évolue au cours du temps. Le terminal peut en calculer une approximation acceptable en utilisant le débit courant sur le réseau et différentes données qu'il a mémorisées relativement aux téléchargements précédents. Un exemple de tel calcul sera donné en référence à la figure 7.

L'utilisateur choisit un fragment i à partir duquel il souhaite commencer la visualisation du contenu. Par exemple, l'utilisateur choisit, via une interface homme-machine, l'instant ou le chapitre auquel il souhaite commencer la visualisation et le début effectif se fera sur le fragment correspondant le plus proche. Ce positionnement au fragment le plus proche ne pose pas de problème si les fragments ont tous une durée assez courte (de l'ordre d'une seconde par exemple) car dans ce cas la différence entre l'instant réel t demandé par l'utilisateur et le fragment i est négligeable. Dans le cas contraire cependant, une variante sera proposée dans la suite pour l'ajustement du temps de calcul entre l'instant t de début et le fragment i le plus proche.

L'invention permet de calculer simplement le temps d'attente avant restitution TaR(i) que l'utilisateur devra attendre avant de lancer la lecture du film à partir du début de ce fragment i. S'il ne respecte pas ce temps d'attente avant restitution, il sera confronté à des saccades et pauses dans la lecture de la vidéo car il n'aura pas stocké suffisamment de données avant le début de la visualisation.

Pour le fragment i, compris entre 0 et (N-1), le temps d'attente avant restitution au fragment i, TaR(i) est calculé selon la formule :

$$TaR(i) = max(0, TaR(i+1) + \Delta(i)) \qquad (1)$$

Où :

- TaR(i+1) est le temps d'attente avant restitution au fragment (i+1),
- et $\Delta(i)$ représente la variation du temps d'attente avant restitution induite par le fragment i. Il peut être positif, négatif ou nul, et se calcule comme suit :

$$\Delta(i) = TT(i) - T(i) \qquad (2)$$

Où T(i) représente la durée du fragment i et TT(i) représente le temps nécessaire au téléchargement du fragment i, ce temps dépendant du volume V(i) du fragment et du débit de téléchargement, DR(t), selon la formule

$$TT(i) = V(i)/DR(t). \qquad (3)$$

$\Delta(i)$ est donc positif si le débit du flux vidéo DV(i) est supérieur au débit de téléchargement DR(t) (entraînant une augmentation du temps d'attente avant restitution entre le fragment (i+1) et le fragment i), et négatif si le débit du flux vidéo est inférieur au débit de téléchargement (entraînant une réduction du temps d'attente avant restitution entre le fragment (i+1) et le fragment i).

L'opérateur max() de la formule 1 permet d'assurer que le temps d'attente avant restitution au fragment i est positif ou nul. Une valeur négative du temps d'attente n'étant pas interprétable, celui-ci est forcé à la valeur 0 dans un tel cas. Un temps TaR(i) égal à 0 indique que le temps d'attente avant restitution est nul, en d'autres termes que la visualisation peut commencer immédiatement, dès réception des données de la vidéo.

Cette formule est récursive, c'est-à-dire que la fonction de calcul du temps TaR est appliquée dans sa propre définition. L'algorithme de l'invention calcule le temps d'attente avant restitution par récursivité à partir de la fin du fichier. Pour initialiser l'algorithme, on peut poser un temps d'attente nul avant visualisation, pour un fragment virtuel placé en fin de fichier, représenté en pointillé sur la figure à l'abscisse N, soit TaR(N) = 0. Puis en appliquant la formule 1, on peut calculer récursivement :

$$TaR(N) = 0 \; ;$$

$$TaR(N-1) = max(0, TaR(N) + \Delta(N-1)),$$

Il est important de noter ici qu'une initialisation correcte du temps d'attente avant prévisualisation n'étant possible qu'à partir de la fin du fichier, l'algorithme ne peut progresser correctement que dans le sens inverse du temps (de i+1 vers i).

En variante, on peut majorer la valeur du temps d'attente avant restitution, de manière à le surestimer légèrement pour diminuer les risques d'erreurs. Par exemple, cette majoration pourra être appliquée selon le calcul :

$$TaR'(i) = TaR(i) \times PM + TM \qquad (4)$$

Où

- PM (Pourcentage Marge) est une valeur de pourcentage légèrement supérieure à 1 ;
- TM (Durée Marge) est une valeur en secondes positive ou nulle.

Selon une autre variante de l'invention, particulièrement pertinente dans le cas où, comme expliqué ci-dessus, les fragments présentent des durées assez longues (typiquement supérieures à une seconde), il peut être souhaitable d'ajuster le calcul du temps d'attente avant restitution de manière à ce que l'utilisateur puisse commencer la restitution à un instant t quelconque compris entre deux valeurs i et (i+1) de début de fragment. On pourra à cette fin utiliser une formule du type :

$$TaR(t) = TaR(i) - TaR(i) * VT(i) / T(i) \qquad (5)$$

Où VT(i) est le volume du fragment déjà téléchargé (entre i et t).

La figure 6 décrit une variante de l'invention, dans le cas où une partie des données a déjà été téléchargée. Par exemple, si l'utilisateur a déjà visualisé partiellement la vidéo, une partie des fragments peut être disponible sur son terminal, comme présenté sur la figure 6 : les zones hachurées des fragments 0,3 et 6 sont disponibles dans la mémoire du terminal. Dans ce cas, l'algorithme décrit ci-dessus à l'appui de la figure 5 est modifié comme suit :

$$TaR(i) = max(0, TaR(i+1) + \mathbf{\Delta'}(i)) \qquad (1')$$

$$\Delta'(i) = TT'(i) - T(i) \qquad (2')$$

Où T(i) représente toujours la durée du fragment i et TT'(i) représente le temps nécessaire au téléchargement du fragment i prenant en compte la partie qui a déjà été téléchargée, c'est-à-dire

$$TT'(i) = [V(i)-VT(i)]/DR(t) \qquad (3')$$

où VT(i) est le volume du fragment déjà téléchargé. Sur notre exemple, pour le fragment i=5, la partie déjà téléchargée vaut VT(i) = 2 msec *200 kb/s = 0,2 kbits.

La figure 7 illustre par un organigramme le calcul du temps d'attente avant restitution selon un mode de réalisation de l'invention.

Selon ce mode, le calcul du temps d'attente avant restitution est pré-calculé par un programme qui s'exécute sur le CPU 21 du terminal. Dès réception du fichier d'informations (5) relatif à un contenu vidéo, le temps TaR(i) est calculé pour chaque fragment i du contenu et stocké dans une table, dans la mémoire 22 du terminal. Ce temps d'attente dépend des ensembles, ou fragments descriptifs du contenu, mais aussi du débit de téléchargement DR(t), qui a été supposé constant dans la description de la figure 5. On suppose ici, au contraire, que ce débit de téléchargement, évalué au cours d'une étape E1 de l'algorithme, est variable et réévalué régulièrement par le terminal, par exemple toutes les 5 secondes, ou de manière cyclique. Dans cet exemple, le débit DR(t) peut être évalué de la manière suivante :

$$DR(t) = \alpha \times DR(t-1) + (1 - \alpha) \times DI(t) \qquad (6)$$

où :

- DI(t) est le Débit Immédiat mesuré par le terminal à l'instant t

- DR(t-1) est le débit estimé à l'instant de mesure précédent (par exemple 5 secondes auparavant)

- $\alpha$ est une valeur comprise entre 0 et 1 ; si on souhaite favoriser judicieusement DR(t-1) par rapport à DI(t) on prendra par exemple $\alpha$ = 0,6.

A l'initialisation de l'algorithme, le débit DR(0) (débit estimé au début du téléchargement) peut prendre par exemple la valeur du débit moyen de téléchargement lors de plusieurs téléchargements effectués précédemment, ou le débit immédiat mesuré en fin de téléchargement du dernier fichier, ou toute autre combinaison des temps de téléchargements mémorisés par le terminal au cours de ses précédents téléchargements.

Lors d'une étape E2, le terminal initialise les variables i à N et TaR(N) à 0, c'est à dire que l'on se positionne sur le fragment virtuel N de la fin du fichier, comme décrit à l'appui de la figure 5, auquel est affecté un temps d'attente avant restitution d'une valeur nulle.

Puis au cours d'une étape E3, le programme décrémente la variable i pour se positionner sur le fragment temporellement précédent, et calcule le temps d'attente avant restitution, TaR(i), nécessaire pour restituer la vidéo depuis ce fragment i jusqu'à la fin du fichier. Comme expliqué à l'appui de la figure 5, l'équation (1) permet de calculer TaR(i) à partir de TaR(i+1) et de la valeur $\Delta$(i) de la variation du temps d'attente avant restitution induite par le fragment i. Le temps TaR(i) est stocké dans une table T en mémoire au cours d'une étape E4.

Au cours de l'étape suivante E5, on vérifie que la variable i n'est pas nulle. Si le test de l'étape E5 est positif (i=0), le début de fichier est atteint et une étape E6 suivante est effectuée. Sinon, le début de fichier n'étant pas encore atteint, les étapes E3 et E4 sont effectuées de nouveau pour calculer et stocker le temps d'attente avant restitution relatif au fragment précédent.

Lors de l'étape E6, un test est effectué pour savoir si la table doit être rafraichie en mémoire. Si ce test est positif, les étapes E1 à E5 décrites précédemment sont effectuées de nouveau. Une nouvelle valeur de DR(t) est évaluée et les nouvelles valeurs TaR(i) sont mémorisées dans la table à la place des anciennes. Sinon, l'algorithme s'arrête.

Ainsi, on dispose en mémoire de valeurs actualisées, immédiatement disponibles, qui permettent de préciser à l'utilisateur, à n'importe quel moment, le temps d'attente durant lequel il devra patienter avant de commencer la visualisation de son film à un instant i quelconque, sans nécessité de les recalculer à chaque requête de l'utilisateur.

## Revendications

1. Procédé de demande d'accès par un terminal (2) à un contenu numérique (4) apte à être téléchargé sous la forme d'un flux de données depuis un réseau (3), ledit contenu étant représenté par au moins deux ensembles successifs (i, i+1), ledit terminal étant apte à requérir la restitution du contenu, **caractérisé en ce qu'**une requête est suivie des étapes suivantes pour calculer le temps d'attente avant restitution :

    - obtention, pour un premier ensemble (i), d'un débit de codage (DV(i)) et d'une durée (T(i)) ;
    - obtention d'un débit de téléchargement (DR) ;
    - obtention, pour un second ensemble (i+1) suivant le premier ensemble, d'un temps d'attente avant restitution (TR(i+1)) ;
    - calcul d'un temps d'attente avant restitution (TaR) pour le premier ensemble (i) prenant en compte le débit de téléchargement (DR), le débit de codage (DV(i)) et la durée T(i) du premier ensemble (i), et le temps d'attente avant restitution du second ensemble (i+1).

2. Procédé de demande d'accès selon la revendication 1, **caractérisé en ce que** le calcul du temps d'attente avant restitution (TaR) pour ledit premier ensemble (i) s'effectue selon la formule mathématique suivante :

$$TaR(i) = max(0, TaR(i+1) + \Delta(i)) \qquad (1)$$

Où :

    - TaR(i+1) est le temps d'attente avant restitution pour le second ensemble (i+1) ;
    - $\Delta(i)$ représente la variation du temps d'attente avant restitution induite par l'ensemble i ;
    - L'opérateur max () affecte une valeur nulle à TaR(i) si TaR(i) est négatif,

3. Procédé de demande d'accès selon la revendication 1, **caractérisé en ce que** le débit de codage est variable et **en ce que** le résultat du calcul du temps d'attente avant visualisation est majoré.

4. Terminal (2) apte à requérir la restitution d'un contenu (4) téléchargé sous la forme d'un flux de données depuis un réseau (3), ledit contenu étant représenté par au moins deux ensembles successifs (i, i+1), le terminal comprenant :

    • des moyens pour obtenir, pour un premier ensemble (i), un débit de codage (DV(i)) et une durée (T(i))
    • des moyens d'obtention d'un débit de téléchargement (DR) ;
    • des moyens d'obtention, pour un second ensemble (i+1) suivant le premier ensemble, d'un temps d'attente avant restitution (TR(i+1)) ;
    • des moyens pour calculer un temps d'attente avant restitution pour le premier ensemble (i) prenant en compte le débit de téléchargement (DR), le débit de codage (DV(i)) et la durée T(i) du premier ensemble (i), et le temps d'attente avant restitution du second ensemble (i+1).

5. Système Informatique incluant un serveur apte à transmettre un contenu numérique (4) sous la forme d'un flux de données sur un réseau de communication (3), le contenu étant encodé avant sa transmission sous la forme d'au moins deux ensembles successifs (i, i+1), chaque ensemble étant associé à un débit de codage (DV(i)) et une durée (T(i)) et un terminal tel que défini dans la revendication 4.

6. Programme d'ordinateur apte à être mis en œuvre sur un terminal tel que défini dans la revendication 4 le programme comprenant des instructions de code qui, lorsque le programme est exécuté par un processeur réalise les étapes du procédé selon la revendication 1.

**Patentansprüche**

1. Verfahren zur Anforderung des Zugangs über ein Endgerät (2) auf einen digitalen Inhalt (4), der in Form eines Datenstroms von einem Netz (3) heruntergeladen werden kann, wobei der Inhalt durch mindestens zwei aufeinander folgende Mengen (i, i+1) dargestellt wird, wobei das Endgerät geeignet ist, zur Wiedergabe des Inhalts aufzufordern, **dadurch gekennzeichnet, dass** auf eine Aufforderung die folgenden Schritte folgen, um die Wartezeit vor der Wiedergabe zu berechnen:

   - Erhalten, für eine erste Menge (i), einer Codierungsbitrate (DV(i)) und einer Zeitdauer (T(i));
   - Erhalten einer Download-Bitrate (DR);
   - Erhalten, für eine zweite Menge (i+1), die auf die erste Menge folgt, einer Wartezeit vor der Wiedergabe (TR(i+1));
   - Berechnen einer Wartezeit vor der Wiedergabe (TaR) für die erste Menge (i) unter Berücksichtigung der Download-Bitrate (DR), der Codierungsbitrate (DV(i)) und der Zeitdauer T(i) der ersten Menge (i) und der Wartezeit vor der Wiedergabe der zweiten Menge (i+1).

2. Verfahren zur Anforderung nach Anspruch 1, **dadurch gekennzeichnet, dass** die Berechnung der Wartezeit vor der Wiedergabe (TaR) für die erste Menge (i) nach der folgenden mathematischen Formel erfolgt:

$$\text{TaR(i)} = \max(0, \text{TaR(i+1)} + \Delta(i)) \qquad (1)$$

   worin:

   - TaR(i+1) die Wartezeit vor der Wiedergabe für die zweite Menge (i+1) ist;
   - $\Delta(i)$ die durch die Menge i bedingte Änderung der Wartezeit vor der Wiedergabe darstellt;
   - der Operator max () TaR(i) einen Wert von null zuweist wenn TaR(i) negativ ist.

3. Verfahren zur Anforderung des Zugangs nach Anspruch 1, **dadurch gekennzeichnet, dass** die Codierungsbitrate variabel ist und dass das Ergebnis der Berechnung der Wartezeit vor der Anzeige erhöht wird.

4. Endgerät (2), das geeignet ist, zur Wiedergabe eines Inhalts (4) aufzufordern, der in Form eines Datenstroms von einem Netz (3) heruntergeladen wurde, wobei der Inhalt durch mindestens zwei aufeinander folgende Mengen (i, i+1) dargestellt wird, wobei das Endgerät umfasst:

   • Mittel, um für eine erste Menge (i) eine Codierungsbitrate (DV(i)) und eine Zeitdauer (T(i)) zu erhalten;
   • Mittel zum Erhalten einer Download-Bitrate (DR);
   • Mittel zum Erhalten, für eine zweite Menge (i+1), die auf die erste Menge folgt, einer Wartezeit vor der Wiedergabe (TR(i+1));
   • Mittel zum Berechnen einer Wartezeit vor der Wiedergabe für die erste Menge (i) unter Berücksichtigung der Download-Bitrate (DR), der Codierungsbitrate (DV(i)) und der Zeitdauer T(i) der ersten Menge (i) und der Wartezeit vor der Wiedergabe der zweiten Menge (i+1).

5. Informationssystem, das einen Server beinhaltet, der geeignet ist, einen digitalen Inhalt (4) in Form eines Datenstroms über ein Kommunikationsnetz (3) zu übertragen, wobei der Inhalt vor seiner Übertragung in Form von mindestens zwei aufeinander folgenden Mengen (i, i+1) codiert wird, wobei jede Menge einer Codierungsbitrate (DV(i)) und einer Zeitdauer (T(i)) und einem Endgerät nach Anspruch 4 zugewiesen wird.

6. Computerprogramm, das geeignet ist, auf einem Endgerät nach Anspruch 4 ausgeführt zu werden, wobei das Programm Codeanweisungen umfasst, die bei der Ausführung des Programms durch einen Prozessor die Schritte des Verfahrens nach Anspruch 1 ausführen.

**Claims**

1. Method for a terminal (2) to request access to an item of digital content (4) capable of being downloaded in the form of a data stream from a network (3), said content being represented by at least two successive sets (i, i+1), said terminal being capable of requesting the rendering of the content, **characterized in that** a request is followed by the following steps for calculating the waiting time before rendering:

   - obtaining, for a first set (i), a code rate (DV(i)) and a duration (T(i));
   - obtaining a download speed (DR);
   - obtaining, for a second set (i+1) subsequent to the first set, a waiting time before rendering (TR(i+1));
   - calculating a waiting time before rendering (TaR) for the first set (i) taking into account the download speed (DR), the code rate (DV(i)) and the duration T(i) of the first set (i), and the waiting time before rendering of the second set (i+1).

2. Method for requesting access according to Claim 1, **characterized in that** the time before rendering (TaR) for said first set (i) is calculated according to the following mathematical formula:

$$\mathtt{TaR(i)\ =\ max(0,\ TaR(i+1)\ +\ \Delta(i))\qquad(1)}$$

   where:

   - TaR(+1) is the waiting time before rendering for the second set (i+1);
   - $\Delta(i)$ represents the variation in the waiting time before rendering caused by the set i;
   - the operator max() assigns a value of zero to TaR(i) if TaR(i) is negative.

3. Method for requesting access according to Claim 1, **characterized in that** the code rate is variable and **in that** an upper bound is found for the result of the calculation of the waiting time before viewing.

4. Terminal (2) capable of requesting the rendering of an item of content (4) downloaded in the form of a data stream from a network (3), said item of content being represented by at least two successive sets (i, i+1), the terminal comprising:

   - means for obtaining, for a first set (i), a code rate (DV(i)) and a duration (T(i));
   - means for obtaining a download speed (DR);
   - means for obtaining, for a second set (i+1) subsequent to the first set, a waiting time before rendering (TR(i+1));
   - means for calculating a waiting time before rendering (TaR) for the first set (i) taking into account the download speed (DR), the code rate (DV(i)) and the duration (T(i) of the first set (i), and the waiting time before rendering of the second set (i+1).

5. Computer system including a server capable of transmitting an item of digital content (4) in the form of a data stream over a communication network (3), the item of content being encoded before the transmission thereof in the form of at least two successive sets (i, i+1), each set being associated with a code rate (DV(i)) and a duration (T(i)), and a terminal such as defined in Claim 4.

6. Computer program capable of being implemented on a terminal such as defined in Claim 4, the program comprising code instructions which, when the program is executed by a processor, perform the steps of the method according to Claim 1.

Figure 1

Figure 2

Figure 3

Figure 4

Figure 5

Figure 6

Figure 7

## RÉFÉRENCES CITÉES DANS LA DESCRIPTION

**Documents brevets cités dans la description**

- WO 20043903 A